# EUROPEAN PATENT SPECIFICATION

(11) **EP 4 455 994 B1**
(45) Date of publication and mention of the grant of the patent: **26.08.2026**
(21) Application number: 23170809.0
(22) Date of filing: 28.04.2023
(51) Int. Cl.: G06T 7/50, G06N 3/00

(54) **METHODS FOR TEST-TIME DOMAIN ADAPTATION OF DEPTH ESTIMATION MODELS**
VERFAHREN ZUR DOMÄNEN-ANPASSUNG VON TIEFENSCHÄTZUNGSMODELLEN ZUR LAUFZEIT
PROCÉDÉS D'ADAPTATION DE DOMAINE DE MODÈLES D'ESTIMATION DE PROFONDEUR EN TEMPS DE TEST

(43) Date of publication of application: 30.10.2024
(73) Proprietor: TOYOTA JIDOSHA KABUSHIKI KAISHA, Toyota-shi, Aichi-ken, 471 8571 (JP); Max-Planck-Institut für Informatik, 66123 Saarbrücken (DE)
(72) Inventor: LI, Zhi, 66123 SAARBRÜCKEN (DE); OLMEDA REINO, Daniel, 1140 BRUSSELS (BE); SHI, Shaoshuai, 66123 SAARBRÜCKEN (DE); SCHIELE, Bernt, 66123 SAARBRÜCKEN (DE); DAI, Dengxin, 66123 SAARBRÜCKEN (DE)
(74) Representative: Cabinet Beau de Loménie

(56) References cited:
- WO-A1-2021/167910
- LI ZHI ET AL: "Test-time Domain Adaptation for Monocular Depth Estimation", 2023 IEEE INTERNATIONAL CONFERENCE ON ROBOTICS AND AUTOMATION (ICRA), IEEE, 29 May 2023 (2023-05-29), pages 4873 - 4879, XP034369047, DOI: 10.1109/ICRA48891.2023.10161304
- ANONYMOUS: "Test-time Domain Adaptation for Monocular Depth Estimation - Vision for Autonomous Systems", THE WAYBACK MACHINE, 1 April 2023 (2023-04-01), XP093092241, Retrieved from the Internet <URL:https://web.archive.org/web/20230401080934/https://vas.mpi-inf.mpg.de/ttda-depth/> [retrieved on 20231017]
- FACIL JOSE M ED - FACIL JOSE M: "CAM-Convs: Camera-Aware Multi-Scale Convolutions for Single-View Depth", CONFERENCE ON COMPUTER VISION AND PATTERN RECOGNITION (CVPR),, 1 January 2019 (2019-01-01), pages 11826 - 11835, XP002802642

## Description

### BACKGROUND OF THE INVENTION

### 1. Field of the Invention

The invention relates to the field of domain adaptation of machine learning models. In particular, the invention relates to computer-implemented methods for domain adaptation of depth estimation models.

### 2. Description of Related Art

Machine learning algorithms are generally trained on source domain data and then used to perform tasks on target domain data. However, the source domain and the target domain may exhibit different distributions of data (domain gap) which can lead to poor performance of the trained machine learning model when used on specific target domain data. In particular, a depth estimation model trained on a set of training images may exhibit poor performances when used on target images comprising different objects and/or different scales than in the training set.

A goal of domain adaptation is therefore to reduce the domain gap between the source domain and target domain so that better inference can be obtained from the source-trained model. This can be achieved through various techniques such as domain adaptation algorithms that aim to learn domain-invariant representations or by leveraging transfer learning techniques to adapt to the target domain.

Domain adaptation may be especially useful in situations where labelled ground truth data is scarce or expensive to obtain for the target domain, as can be the case in depth estimation methods from monocular images. In such case, depth estimation models are generally trained on source data that is limited and does not comprise all the possible variations that can be found in the target domain, so that domain adaptation is required.

The following references disclose various methods relating to domain adaptation, depth estimation, and techniques useful for such methods.
[REF 1] KUZNIETSOV, Yevhen, PROESMANS, Marc, et VAN GOOL, Luc. Comoda: Continuous monocular depth adaptation using past experiences. In : Proceedings of the IEEE/CVF Winter Conference on Applications of Computer Vision. 2021. p. 2907-2917.
[REF 2] WANG, Qin, FINK, Olga, VAN GOOL, Luc, et al. Continual test-time domain adaptation. In : Proceedings of the IEEE/CVF Conference on Computer Vision and Pattern Recognition. 2022. p. 7201-7211.
[REF 3] PAN, Sinno Jialin, TSANG, Ivor W., KWOK, James T., et al. Domain adaptation via transfer component analysis. IEEE transactions on neural networks, 2010, vol. 22, no 2, p. 199-210.
[REF 4] PATEL, Vishal M., GOPALAN, Raghuraman, LI, Ruonan, et al. Visual domain adaptation: A survey of recent advances. IEEE signal processing magazine, 2015, vol. 32, no 3, p. 53-69.
[REF 5] TARVAINEN, Antti et VALPOLA, Harri. Mean teachers are better role models: Weight-averaged consistency targets improve semi-supervised deep learning results. Advances in neural information processing systems, 2017, vol. 30.
[REF 6] GEIGER, Andreas, LENZ, Philip, STILLER, Christoph, et al. Vision meets robotics: The kitti dataset. The International Journal of Robotics Research, 2013, vol. 32, no 11, p. 1231-1237.
[REF 7] GUIZILINI, Vitor, AMBRUS, Rares, PILLAI, Sudeep, et al. 3d packing for self-supervised monocular depth estimation. In : Proceedings of the IEEE/CVF conference on computer vision and pattern recognition. 2020. p. 2485-2494.
[REF 8] EIGEN, David, PUHRSCH, Christian, et FERGUS, Rob. Depth map prediction from a single image using a multi-scale deep network. Advances in neural information processing systems, 2014, vol. 27.
[REF 9] XUE, Feng, ZHUO, Guirong, HUANG, Ziyuan, et al. Toward hierarchical self-supervised monocular absolute depth estimation for autonomous driving applications. In : 2020 IEEE/RSJ International Conference on Intelligent Robots and Systems (IROS). IEEE, 2020. p. 2330-2337.
[REF 10] YUAN, Weihao, GU, Xiaodong, DAI, Zuozhuo, et al. New crfs: Neural window fully-connected crfs for monocular depth estimation. arXiv preprint arXiv:2203.01502, 2022.
[REF 11] GODARD, Clément, MAC AODHA, Oisin, FIRMAN, Michael, et al. Digging into self-supervised monocular depth estimation. In : Proceedings of the IEEE/CVF international conference on computer vision. 2019. p. 3828-3838.
[REF 12] ETTINGER, Scott, CHENG, Shuyang, CAINE, Benjamin, et al. Large scale interactive motion forecasting for autonomous driving: The waymo open motion dataset. In : Proceedings of the IEEE/CVF International Conference on Computer Vision. 2021. p. 9710-9719.
[REF 13] The website available at "https://web.archive.org/web/20230401080934 /https://vas.mpi-inf.mpg.de/ttda-depth/" discloses a test-time domain adaptation method for monocular estimation.
[REF 14] WO2021167910A1 discloses a method for generating a dataset, a method for generating a neural network, and a method for constructing a model of a scene.

### SUMMARY OF THE INVENTION

Domain adaptation methods of the prior art generally require access to the source data during the domain adaptation process (e.g. [REF 3] and [REF 4]), which is seen as a disadvantage due to privacy concerns and technical constraints. In the context of image depth estimation, self-supervised methods have been disclosed to avoid using the source data, however such methods lack the ability to provide absolute depth map predictions, see for example [REF 11].

In the present description, absolute depth map predictions (sometimes also referred to as scale-aware predictions in the prior art) are depth map predictions that comprise absolute distances between the camera and objects represented in the image acquired by such camera. Conversely, relative (scale-unaware) depth map predictions are depth map predictions that comprise relative distances between the camera and objects represented in the image acquired by such camera. The relative depth predictions need to be multiplied by an unknown rescaling factor in order to obtain absolute depth map predictions. Therefore, methods providing relative predictions must be combined with non-trivial scale-recovery techniques.

The present disclosure presents a method solving problems of the prior art.

According to aspects of the present disclosure, a computer-implemented method for test-time domain adaptation of a first depth estimation model trained on source data is provided. The method comprises, for each target image of a set of target data, the steps of:
- (S10) aligning a scale of the target image to a scale of the source data, thereby generating an aligned image; and
- (S20) using the first depth estimation model to generate a depth map prediction for the aligned image;
characterized in that the step of aligning a scale of the target image to a scale of the source data comprises:
- resizing the target image to account for a difference between a target height of a device used for acquisition of the target image and a source height of a device used for acquisition of the source data, such source height being extracted from the known source metadata of the source data.

In the present description, aligning a scale of a target image to a scale of source data refers to the process of resizing the target image so that the height and width of objects (or pixels) in the target image have the same height and width of similar objects (or pixels) in the source data, respectively. Such resizing may involve, multiplying the height of the target image by a first factor and the width of the target image by a second factor. The second factor may be equal to the first factor to preserve an aspect ratio of the target image. It is not necessary that the size of the aligned target image is equal to the size of an image from the source data.
In the present description, the target height and the source height are the actual height of the devices used for acquiring the target data and the source data, with reference to the ground.
Resizing the target image allows for avoiding disparity between scales of the source data and the target data induced by difference in heights of the device used to acquire the source data and the device used to acquire the target data. The alignment step improves significantly the performance of any depth estimation model used in the method.

With the test-time domain adaptation method according to the present description, such scale alignment (resizing) significantly improves inference of the first depth estimation model in the presence of domains gaps between source data on which the depth estimation model has been trained and target data on which the inference is performed. In particular, the resizing of the target data allows the first depth estimation model to provide absolute depth map predictions for the target data. The improvement is particularly significant in the presence of large domain gaps, such as for datasets acquired at different time of day or under different weather conditions.

Further, the present method provides "test-time" domain adaptation of the first depth estimation model to the target data. Therefore, the depth estimation model can be adapted to changing target data in real-time, without requiring knowledge of the whole set of target data.

In the present description, test-time domain adaptation of a machine learning model refers to the fact that the domain adaptation is performed concurrently to the inference, which is also referred to as "on-the-fly" or "online" in the technical field of domain adaptation. This is particularly advantageous compared to methods of the prior art which are "offline", wherein domain adaptation is performed on the complete set of test target data, as a finalization step of the training of the machine learning model, see for example [REF 3] and [REF 4]. Specifically, in the context of depth estimation, offline domain adaptation methods are preferably avoided as it is difficult to have access to the complete set of target data before starting inference and it is therefore considered unrealistic for many machine perception applications dealing with a changing environment.

Further, during inference, the present test-time domain adaptation method does not need access to ground truth labels from the source data or from the target data in order to make absolute depth predictions. Such method may therefore be used with any off-the-shelf depth estimation model without requiring access to the particular source data used to train the model, provided that the metadata of the source data are known (which does not raise technical or privacy issues). This is in stark contrast with the method of [REF 1], which requires additional supervision using ground truth data of the target (ground truth velocity) in order to generate correctly scaled (absolute) depth maps.

According to embodiments, the step of aligning a scale of the target image to a scale of the source data comprises:
- resizing the target image to account for a difference between a target focal length of a device used for acquisition of the target image and a source focal length of a device used for acquisition of the source data, such source focal length being extracted from known source metadata of the source data.

Such resizing allows for avoiding disparity between scales of the source data and the target data induced by difference in focal lengths between the source data and the target data. The alignment step improves significantly the performance of any depth estimation model used in the method.

According to embodiments, the present method further comprises steps of:
- using a second depth estimation model pre-trained on the source data under supervised learning to generate a reference depth map prediction for the aligned image, wherein the second depth estimation model is fixed after training; and
- updating the first depth estimation model in order to minimize a domain adaptation loss configured to compare the depth map prediction generated by the first depth estimation model to the reference depth map prediction generated by the second depth estimation model.

In such configuration, the second depth estimation model, which is pre-trained on the source data under supervised learning, and fixed after such training, provides absolute depth predictions which do not drift during successive inference on the target data.

The absolute depth map predictions of the second depth estimation model are advantageously used as pseudo-labels in order to correct the depth map prediction of the first depth estimation model. Such correction implies that the depth map prediction of the second depth estimation model are used to update (fine-tune) the first depth estimation model so that the depth map prediction of the first depth estimation model remain absolute (scale-aware) and do not drift during inference. Such correction can be qualified as a supervision of the domain adaptation of the first depth estimation model by the second depth estimation model.

According to embodiments, the domain adaptation loss is further configured to calculate a per-pixel difference between the depth map prediction generated by the first depth estimation model and the reference depth map prediction generated by the second depth estimation model.

According to embodiments, the domain adaptation loss is further configured to mask out pixels of the reference depth map prediction generated by the second depth estimation model for which a distance between the depth map prediction generated by the first depth map estimation model and the reference depth map prediction generated by the second depth estimation model is superior to a given threshold.

According to embodiments, the second-depth estimation model is a copy of the pre-trained first depth estimation model that is fixed after training on the source data.

According to embodiments, the present method further comprises steps of:
- using a third depth estimation model, pre-trained under self-supervised learning using a given self-supervised loss, to generate a self-supervised depth map prediction for the aligned image;

wherein the third depth estimation model is updated, for the target image, using such self-supervised loss; and
wherein the step of updating the first depth estimation model further comprises:
   - updating the first depth estimation model in order to minimize a domain adaptation loss configured to compare the depth map prediction generated by the first depth estimation model to the self-supervised depth map prediction generated by the third depth estimation model.

In such configuration, for each target image, both the first and third depth estimation model are updated.

Further, in such configuration, the third depth estimation model is pre-trained on training data under self-supervision, and is updated, during inference, using the same loss function that is used during the training.

Further, in such configuration, the depth map prediction from the second depth estimation model and the depth map prediction from the third depth estimation model are used as pseudo-labels to correct the depth map prediction of the first depth estimation model in a synergistic manner. On the one hand, the second depth estimation model, which is pre-trained on the source data under supervised learning and fixed, provides absolute depth predictions that are used to correct the relative depth map predictions generated by the first depth estimation model, thereby avoiding any scale drift during inference. Further, on the second hand, the third depth estimation model, which is pre-trained on training data (which may be similar or different than the source data) under self-supervised learning, and which is updated for each target image using the same self-supervised loss, provides predictions that are not absolute (scale-aware) but that are continuously adapting to the target images of the target data. Therefore, in such embodiment, domain adaptation of the first depth estimation model benefits from synergistic supervision by a scale-aware model (the second depth estimation model) and a continuously adapting self-supervised depth estimation model (the third depth estimation model). The first depth estimation model thereby provides accurate absolute depth map predictions that are continuously adapting to the target images.

In the present description, as the depth map prediction of the second depth estimation model and the depth map prediction of the third depth map prediction are used as pseudo-labels to update the first depth estimation model, such depth map predictions of the second or third depth estimation models are sometimes directly referred to as pseudo-labels.

According to embodiments, the domain adaptation loss is further configured to calculate a per-pixel difference between the depth map prediction generated by the first depth estimation model and a rescaled version of the self-supervised depth map prediction generated by the third depth estimation model, the rescaled version being calculated in order to align with a depth scale of the depth map prediction generated by the first depth estimation model. The rescaling of the self-supervised depth map prediction is a depth rescaling which may comprise the multiplication of the self-supervised depth map prediction by a depth rescaling factor, to correct the relative depth of the self-supervised depth map prediction and thereby provide an absolute depth map prediction. Such rescaling is different from the rescaling in size that is implemented during alignment of the scale of the target image to the scale of the source data.

According to embodiments, the self-supervised depth map prediction (of the third depth estimation model) is rescaled through median scaling, using a rescaling factor equal to a ratio of a median of the depth map prediction generated by the first depth estimation model to a median of the self-supervised depth map prediction generated by the third depth estimation model.

According to embodiments, the domain adaptation loss is further configured to mask out pixels of the self-supervised depth map prediction generated by the third depth estimation model for which a distance between the depth map prediction generated by the first depth map estimation model and the self-supervised depth map prediction generated by the third depth estimation model is superior to a given threshold.

According to embodiments, the third depth estimation model is updated by a self-supervised image synthesis loss based on a pair of aligned target images.

According to embodiments, the third depth estimation model is updated by a self-supervised image synthesis loss based on photometric differences between a second aligned image successive to a first aligned image and a synthesized version of the second aligned image computed from the first aligned image.

According to embodiments, the step of updating the first depth estimation model comprises using an exponential moving average scheme with a given smoothness factor.

The present disclosure is further related to a computer-implemented method for depth estimation on a series of target images, the method comprising steps of:
- training a first depth estimation model under supervised learning on source data;
- providing a copy of the trained first depth estimation model and fixing such copy to produce a second depth estimation model;
- training a third depth estimation model on the source data under self-supervision using an image synthesis loss;
- acquiring the series of target images from observation of a real scene; and
- utilizing the above-mentioned test-time domain adaptation method with said first, second and third depth estimation models in order to generate a depth map prediction for target images of the series.

The present disclosure is further related to a computer program including instructions for executing the steps of the above test-time domain adaptation method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating exemplary embodiments of a test-time domain adaptation method according to the present disclosure;
FIG. 2 is a block diagram illustrating an exemplary architecture of a test-time domain adaptation method according to the present disclosure;
FIGS. 3-4 are tables illustrating comparative performances of embodiments of a test-time domain adaptation method according to the present disclosure over known methods; and
FIG. 5 is a table illustrating performances of different embodiments of a test-time domain adaptation method according to the present disclosure.

### DETAILED DESCRIPTION OF EMBODIMENTS

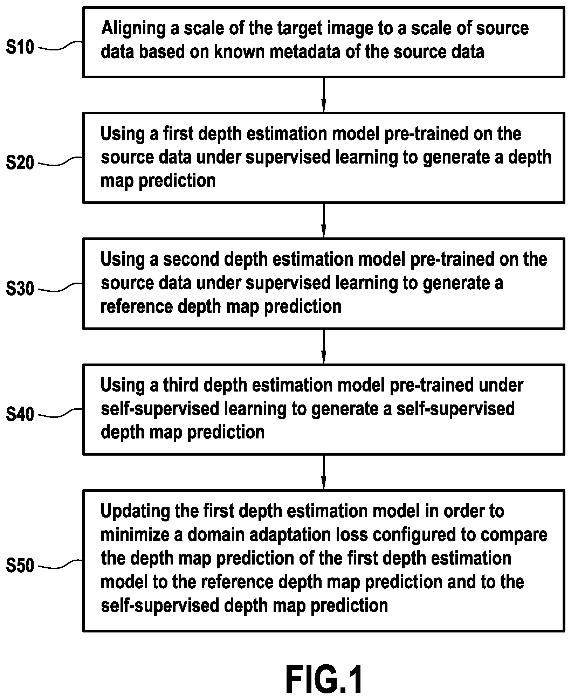

Methods for test-time domain adaptation of a depth estimation model, which constitute exemplary embodiments of the present disclosure, are now going to be presented in relation with FIGS.1-5.

In reference to FIG. 1, embodiments of the test-time domain adaptation method may comprise the main processing steps of: S10: Aligning a scale of a target image to a scale of source data; S20: Using a first depth estimation model pre-trained on the source data under supervised learning to generate a depth map prediction; S30: Using a second depth estimation model pre-trained on the source data under supervised learning to generate a reference depth map prediction; S40: Using a third depth map model pre-trained under self-supervised learning to generate a self-supervised depth map prediction; S50: Updating the first depth estimation model in order to minimize a domain adaptation loss configured to compare the depth map prediction of the first depth estimation model to the reference depth map prediction and to the self-supervised depth map prediction.

In the embodiments described in reference to FIG. 1, the test-time domain adaptation method of the present disclosure comprises using a first depth estimation model, a second depth estimation model, and a third depth estimation model. The second depth estimation model and the third depth estimation model generate depth map predictions used as pseudo-labels in order to supervise the adaptation of the first depth estimation model to the target data. However, in other embodiments, the test-time domain adaptation method according to the present description may comprise only steps S10 and S20, i.e. that only the first depth estimation model is used in combination with the scale alignment of the target image to the source data.

Further embodiments may comprise, for example, using only a first depth estimation model and a second depth estimation model used in combination with scale alignment, the second depth estimation model being used to supervise the domain adaptation of the first depth estimation model.

**S10: Aligning a scale of a target image to a scale of source data.** In step S10, a target image extracted from target data is processed so that it is aligned with the source data used to pre-train the first and second depth estimation models. By aligning, it is meant that the scale of the target image is adapted to the scale of the source data in order to avoid disparities between the scales estimated from the source data and the scale of the source data, i.e. disparities in the sizes that objects have between images. The difference in scale between the target images and the source images may be due to different factors related to the parameters of the device used to capture the images, for example a camera. In particular, the focal length and the height of the camera capturing image affect the scale of the images.

According to principles of imaging, larger focal length results in larger object size on the image. Therefore, considering a target image It (Ht ,Wt) with image height Ht and image width Wt that is acquired by a device with a focal length ft, and source data acquired with a device having a source focal length fs, the present method aligns the target image "pixel sizes" (i.e. object sizes) to the source data by resizing the image by the ratio of the focal lengths (source focal length to target focal length). The resizing may be expressed as follows: $\hat{I} = {I}_{t} \left({H}_{t}\frac{{f}_{s}}{{f}_{t}},{W}_{t}\frac{{f}_{s}}{{f}_{t}}\right)$

Further, the height of the camera affects the scale of imaging. For example, in the context of autonomous driving, for a part of the road having a certain distance to the camera, two cameras with camera heights equal to h1 and h2 provide images of such part with sizes equal to i1 and i2, respectively. In the method according to the present disclosure, the pixel sizes of the roads in the images are aligned between the source data and the target data, in order to avoid scale drifting during inference. Such process is referred to as a scale alignment of the target image to the source data.

According to principles of triangularity, the inventors have shown that it is possible to derive that the sizes of the above-mentioned part of the road in the images are proportional to the camera heights. The proportionality between camera heights and sizes of the part of the road in the images may be expressed as follows: $\frac{{h}_{1}}{{h}_{2}} = \frac{{i}_{1}}{{i}_{2}}$

Therefore, a scale mismatch due to a difference of camera heights can be corrected using a ratio of camera heights between images.

In Equation 2, it is assumed that the two cameras share the same focal length or that the impact of their difference in focal lengths has been removed via alignment using Equation 1.

In embodiments, the effect of a change in focal length and the effect of a change in camera height between the source data and the target data can both be accounted for by a scale alignment that can be expressed as follows: $\hat{I} = {I}_{t} \left({H}_{t}.\frac{{f}_{s}}{{f}_{t}}.\frac{{h}_{s}}{{h}_{t}},{W}_{t}⋅\frac{{f}_{s}}{{f}_{t}}.\frac{{h}_{s}}{{h}_{t}}\right)$

Interestingly, the scale alignment between the target image and the source data may be implemented based only on the metadata of the source data comprising camera intrinsic parameters such as focal length and camera extrinsic parameters, such as height to the ground. Therefore, if the metadata of the source are known in advance, it is possible to implement the scale alignment of the images of the target data without requiring access to the source during inference. Advantageously, accessing the source metadata does not raise the same problems related to the access to the source data because that metadata generally do not contain private information and are easily accessible so that they can be embedded as a parameter in the present test-time domain adaptation method.

**S20: Using a first depth estimation model pre-trained on the source data under supervised learning to generate a depth map prediction.** In step S20, a first depth estimation model 111, for example a monocular depth estimation model, is used to generate a depth map prediction 116. The first depth estimation model 111 may be a neural network-based depth estimation model that is pre-trained on source data under supervised learning. Therefore, for supervised learning, the source data comprise the source images and the ground truth depths (labels). In embodiments, the first depth estimation model may comprise a swin-transformer encoder and a hierarchical decoder.

In embodiments, the training of the first depth estimation model 111 on the source data may be part of the method according to the present disclosure. The training may be implemented, for example, using a scale-invariant logarithmic loss (SILog) evaluating differences between the network predictions and ground truth depth obtained from LIDAR measurements.

In the test-time domain adaptation method according to the present disclosure, the first depth estimation model 111 is the model under adaptation, i.e. the model that is adapted while performing inference on the target data. In order to iteratively adapt to the target data, the first estimation model is updated for each target image. The first depth estimation model may be any depth estimation model such as, for example, DNET (see [REF 9]), NewCRF (see [REF 10]), CoMoDa (see [REF 1]), and CoTTA (see [REF 2]).

**S30: Using a second depth estimation model pre-trained on the source data under supervised learning to generate a reference depth map prediction.** In step S30, a second depth estimation model 121, for example a monocular image depth estimation model, is used to generate a reference depth map prediction 122. The second depth estimation model 121 may be a copy of the first depth estimation model 111 that is pre-trained on the source data but that is fixed after training. Therefore, during inference, the second depth estimation model 121 is not updated. However, the depth map prediction 122 of the second depth estimation model 121 is used as a set of scale-aware pseudo-labels for regularizing the predictions 116 of the first depth estimation model 111, in particular in terms of scale. Such regularization is a supervision of the adaptation of the first depth estimation model 111.

**S40: Using a third depth map model pre-trained under self-supervised learning to generate a self-supervised depth map-prediction.** In step S40, a third depth estimation model 131, for example a monocular depth estimation model, is used to generate another depth map prediction 132 which is used as a set of pseudo-labels for supervising the adaptation of the first depth estimation model 111.

The third depth estimation model 131 is pre-trained under self-supervision, meaning that such model is trained without using ground truth depth values. Importantly, the training dataset used to train the third depth estimation model 131 may be a dataset different that the source data used to train the first depth estimation model 111. In embodiments, the training dataset used to train the third depth estimation model 131 is the same source data as the source data used to train the first depth estimation model 111.

The self-supervision implies that there is no use of ground truth depth of the source data (or of other training data). As a result, the self-supervised pseudo-labels 132 generated by the second depth estimation model 131 are not scale-aware. However, such pseudo-labels adapt continuously to the target data.

In embodiments, the third depth estimation model 131 ("self-supervised model") is trained using image synthesis loss. For example, the third depth estimation model 131 may be trained following the framework disclosed in [REF 11] wherein a neural network-based pose estimation model and a neural network-based depth estimation model are jointly trained.
**S50 Updating the first depth estimation model in order to minimize a domain adaptation loss configured to compare the depth map prediction of the first depth estimation model to the reference depth map prediction and to the self-supervised depth map prediction.** In step S50, the depth map prediction 116 of the first depth estimation model 111 is compared with the reference depth map prediction 122 (pseudo-labels) generated by the second depth estimation model 121 and with the self-supervised depth map prediction 132 (pseudo-labels) generated by the third depth estimation model 131.
In particular, the first depth estimation model 111 may be updated in order to minimize a domain adaptation loss configured to compute a per-pixel difference between the depth map prediction 116 generated by the first depth estimation model 111 and the reference depth map prediction 122 generated by the second depth estimation model 121; and a per-pixel difference between the depth map prediction 116 generated by the first depth estimation model 111 and the self-supervised depth map prediction 132 generated by the third depth estimation model 131.

The domain adaptation loss, 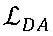 , may comprise a first term, 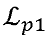 , relating to the comparison with pseudo-labels, *D*_{*p*1}, of the second fixed depth estimation model 121 (regularization term), and a second term, 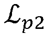 , relating to the comparison with pseudo-labels, *D*_{*p*2}, of the third self-supervised depth estimation model 131 (self-supervised term), as follows: ${L}_{DA} = {L}_{p 1} \left({D}_{s}, {D}_{p 1}\right) + {L}_{p 2} \left({D}_{s}, {D}_{p 2}\right)$

In embodiments, each loss term is a SILog loss as defined in [REF 8].

In order to compute the domain adaptation loss, a filtering 123, 133 of the pseudo-labels 122, 132 may be implemented for filtering out less reliable pixels. The filtering 123, 133 may comprise, for example, a masking 124, 134 and a depth rescaling 135.

In particular, in the illustrated embodiments, the pseudo-labels 122 of the fixed model 121 is processed by a filtering unit 123 comprising a masking 124 of the less reliable pixels with a mask M. Further, the pseudo-labels 132 of the self-supervised model 131 may be processed by a filtering unit 133 comprising a masking 134 and a depth rescaling 135.

The filtered pseudo-labels 126, 136 of the second and third depth estimation models 121, 131, may be expressed, for example, via the following expression: ${\hat{D}}_{p} = {γMD}_{p}$ Where *Dₚ* denotes the filtered pseudo-labels 126, 136 of the second or third depth estimation model 121, 131, *M* is the mask function, and *γ* is an optional depth rescaling factor.

In embodiments, the masking function may be computed as an Iverson bracket defined as follows: $M = \left[\frac{{\left‖{D}_{s}-{γD}_{p}\right‖}^{2}}{{γD}_{p}}<σ\right]$

In Equation 5, pixels are filtered out when a difference between the depth map prediction 116 of the first depth estimation model 111 and the rescaled pseudo-labels 126, 136 of the second or third depth estimation models 121, 131 are superior to the threshold σ. The inventors have shown that a threshold approximately equal to 0.4 is advantageous to efficiently filter out less reliable pixels in view of supervising the domain adaptation of the first depth estimation model 111.

In the case of the pseudo-labels 122 of the second depth estimation model 121, the scaling factor is set to 1 as no depth rescaling is required because the predictions of the second depth estimation model are scale-aware due to the supervised training on source data before inference.

In the case of the pseudo-labels 132 of the third (self-supervised) depth estimation model 131, which are scale-ambiguous, a scaling factor is calculated and applied to align the pseudo-labels of the third (self-supervised) depth estimation model to the depth map prediction of the first depth estimation model.

In embodiments, the rescaling factor may be derived through a median scaling as follows: $γ = \frac{median \left({D}_{s}\right)}{median \left({D}_{p}\right)}$

When updating the first depth estimation model under adaptation 111, exponential moving average may be used for improving performance and robustness. In particular, instead of directly using the updated supervised branch 110, the depth map prediction 116 from the first depth estimation model, *Dₛ,* may be predicted from a slow copy, *θₜ',* of the supervised model parameters, *θₜ*, at step *t*, by an exponential moving average over time with a smoothness factor α, using the following expression. ${θ}_{t} ′ = {αθ}_{t - 1}^{′} + \left(1-α\right) {θ}_{t}$

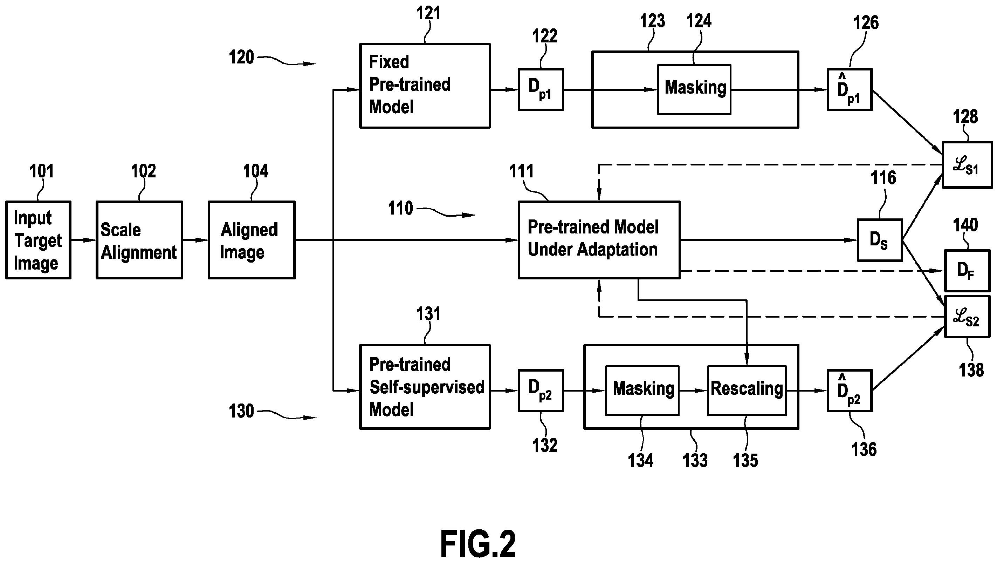

Architecture of embodiments of a test-time domain adaptation method according to the present disclosure is illustrated on FIG. 2. An input target image 101 from target data is provided to a scale alignment module 102 where it is aligned to source data, thereby generating an aligned image 104. The aligned image 104 is provided to three processing branches: a first branch 110 (main branch), a second branch 120 (reference branch), and a third branch 130 (self-supervised branch).

The main branch 110 comprises a pre-trained depth estimation model under adaptation 111 (first depth estimation model). Such model is pre-trained on source data and is being adapted to the target data during inference. This is the depth estimation model on which test-time domain adaptation is implemented during inference. The first depth estimation model 120 is pre-trained on the source data under supervised learning, i.e. using ground truth (labelled) source data.

The reference branch 120 comprises a fixed pre-trained depth estimation model 121 (second depth estimation model). Such model is pre-trained on source data under supervised learning. In embodiments, such model is a copy of the first depth estimation model 111 that is fixed (frozen) after training, before inference is started.

The self-supervised branch 130 comprises a pre-trained self-supervised depth estimation model 131 (third depth estimation model). Such model is a self-supervised depth estimation model pre-trained on monocular videos under self-supervision. As explained when describing Fig. 1, the training data used for the pre-training under self-supervision may not be the source data. Unlike the depth estimation model 110 of the reference branch 120, the self-supervised depth estimation model 130 is not fixed, but is updated, at each iteration, during inference, using the same (self-supervised) loss used during the training.

Based on the aligned image, the main branch 110 generates a depth map prediction 116, the reference branch 120 generates a reference depth map prediction 122 (pseudo-labels), and the self-supervised branch 130 generates a self-supervised depth map prediction 132 (pseudo-labels). The depth map prediction 116 of the main branch 110 is compared with the pseudo-labels 122 generated by the reference branch 120 to compute a first term 128 of a domain adaptation loss. Further, the depth map prediction 116 of the main branch 110 is compared with the pseudo-labels 132 generated by the self-supervised branch 130 to compute a second term 138 of the domain adaptation loss.

The domain adaptation loss 118, 138 is used to update the first depth estimation model 111 and generate, from the updated model, a final depth map prediction 140 for the input target image 101. Advantageously, during inference, the source data is not used for updating the first depth estimation model 111. Once the final depth prediction 140 is generated for an input target image 101, a successive image (frame) of the target data is processed with the same scheme.

In the embodiments illustrated in FIG.2, an optional filtering 123 (consistency check) of the pseudo-labels 122 generated by the reference branch 120 is implemented in order to check the consistency of the pseudo-labels 122. In that case, the first term 128 of the domain adaptation loss is computed using the filtered pseudo-labels 126 instead of the pseudo-labels 122 directly generated by the fixed depth estimation model 121. The filtering 123 may comprise a masking out 124 of some pixels as mentioned when describing FIG.1.

Further, in embodiments illustrated in FIG.2, a filtering 133 of the pseudo-labels 132 generated by the self-supervised branch 130 is implemented in order to check the consistency of the pseudo-labels 132. In that case, the second term 138 of the domain adaptation loss is computed using the filtered pseudo-labels 136 instead of the pseudo-labels 132 directly generated by the self-supervised depth estimation model 131. In the self-supervised branch 130, the filtering 133 comprises a masking 134 of some pixels and a rescaling 135 of the pseudo-labels 132 to the depth scale of the depth map prediction 116 generated by the main branch 111.

Further, although not represented, when updating the first depth estimation model 111 of the main branch 110, an exponential moving average (EMA) scheme may be used to enhance gain and robustness of the method. Such EMA scheme may be similar, for example, to the scheme disclosed in [REF 5].

Although FIG.2 illustrates an embodiment with three branches 110, 120, 130, other embodiments of the method may comprise only the main branch 110 with the pre-trained depth estimation model under adaptation 111, or only the main branch 110 and the reference branch 120. Further, other embodiments of the method may comprise only the main branch 110 and the supervised branch 130.

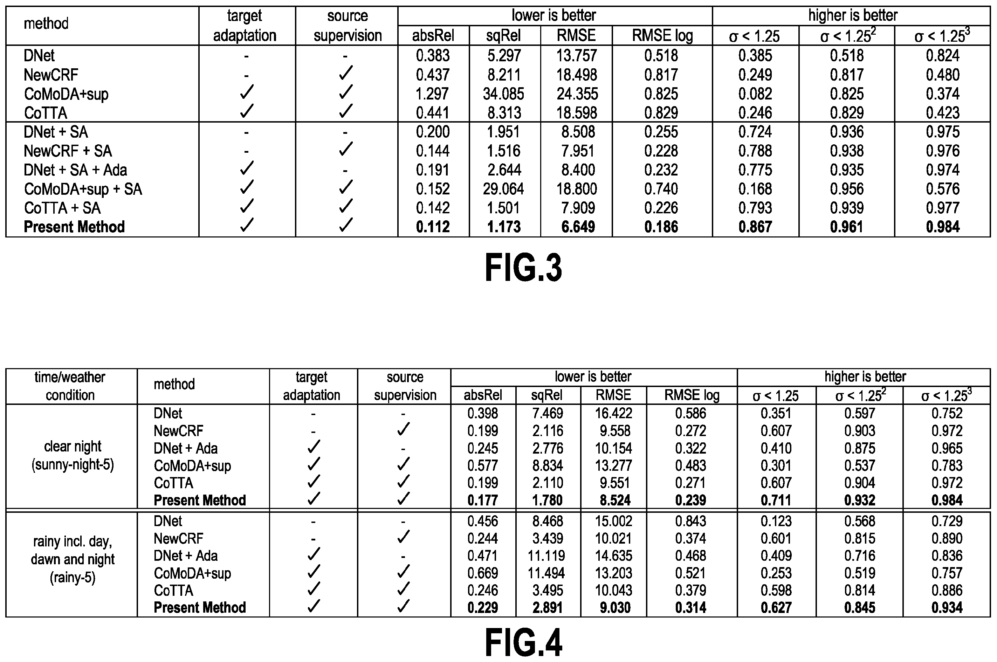

Figs. 3-4 show results of embodiments of the present test-time domain adaptation method when applied to monocular depth estimation in images from known datasets and comparison with known methods. In order to obtain the presented results, the NewCRF model of the prior art is used as the first depth estimation model (see [REF 10]).

FIG. 3 shows results of the present test-time domain adaptation method and known methods when such methods are first trained on a subset of the KITTI dataset (see [REF 6]) used as training set (source data), and then tested on a subset of the DDAD dataset (see [REF 7]) used as a validation set (target data).

The training set is created from the KITTI dataset by adopting the same data splitting pattern as introduced in [REF 8], which splits the data into 32 sequences for training (~40k frames) and 32 sequences for validation (~4k frames). The camera height of this dataset is 1.65m and focal lengths are on average about 750mm.

The DDAD dataset contains monocular videos at 10fps (frames per second) and the corresponding accurate ground-truth depth (across a full 360 degree field of view) generated from high-density LiDARs (up to 200 m) mounted on a fleet of self-driving cars. The validation set used for achieving the results of FIG. 3 is obtained by using the DDAD validation set, which contains 50 scenes with a total of 3850 samples. The camera height is around 1.63 m on average, and focal lengths around 2100 mm.

In FIG. 3, performance of the methods are evaluated using the standard metrics described in [REF 8], which are computed by comparing the depth predicted by the used methods to the ground truth depth from the source data. The error metrics are: absolute relative difference (absRel), square relative difference (sqRel), root mean squared error (RMSE) and RMSE in logarithm space (RMSE log). For such metrics, it is considered that the lower is the better, meaning that the performance of the methods under study is considered higher when the value of the metrics is lower.

Further, in the three last columns of the table in FIG. 3, performance of the methods is evaluated using an accuracy ratio (σ) with three different thresholds. The accuracy ratio is a ratio of depth predictions to ground truth depths known from the used dataset, as defined in [REF 8]. For the three last columns, it is considered that the higher is the better, meaning that the performance of the methods under study is considered higher when the value of the metrics is higher.

Results presented in FIG. 3 are achieved when using an embodiment of the present test-times domain adaptation method comprising a scale alignment module 102 and three branches 110, 120, 130. In particular, such embodiment comprises a main branch 110 wherein the supervised depth estimation model 111 is updated through an EMA scheme. Further, the pseudo-labels 122 of the reference branch 120 are filtered 123 using a mask 124, and the pseudo-labels 132 of the self-supervised branch 130 are filtered 133 using both a mask 134 and a rescaling 135.

In FIG. 3, the known methods to which the present method is compared are: DNET (see [REF 9]), NewCRF (see [REF 10]), CoMoDa (see [REF 1]), CoTTA (see [REF 2]). In row 2 to 5 of the table, the known methods are used on the training set (target data) directly without any scaling alignment between the source data and the target data. Further, in row 6 to 10, the known methods are combined with an alignment scheme according to embodiments of the present description (noted as "+ SA"). Finally, in row 11, the present method is used to adapt to the target data.

From the results shown in FIG.3, it can be observed that the present method provides the best overall performance, thereby outperforming the methods of the prior art.

Directly applying the state-of-the-art methods to the target data (row 2 to 5) results in a significant performance drop compared to the present method, making the predictions nearly unreasonable.

In row 6 to 10, when applying an embodiment of the present method comprising only a scale alignment module and a single branch (noted as "+ SA"), the performance already improves by a large margin compared to the state-of-the-art methods (row 2 to 5), thereby showing the advantage of using a scale alignment module as proposed in the present method.

Further, the present method further improves significantly over the DNet method even when the DNet method is enhanced with domain adaptation through self-supervision (noted as "+ Ada"), using an adaptation scheme of the prior art (see [REF 11]).

For accurate comparison of the present method with the CoMoDA method of [REF 1], a modified version of the CoMoDA method is used in row 4 and 9 (noted as "CoMoDA+sup"). Such modified version is pre-trained with the Monodepth2 architecture (see REF [11]) on the KITTI training set with both supervised and self-supervised loss terms to get scale-aware depth network and pose networks, then the state-of-the-art adaptation scheme disclosed in [REF 11] is applied on the target data, but without "velocity supervision" (i.e. without supervision by ground truth velocity from the target data) and without "replay buffer" (i.e. without access to source data), in order to align with the problem setting of the present method and allow for a fair comparison with the present method. Interestingly, the test-time domain method according to the present description outperforms the modified CoMoDA method.

FIG. 4 shows results of the present test-time domain adaptation method and known methods when such methods are first trained on a subset of the KITTI dataset used as training set (source data), and then tested on a subset of the Waymo dataset (see [REF 12]) used as a validation set (target data).

The Waymo dataset consists of around 1k videos, each about 200 frames at 10fps, under different weather conditions (sunny, rain) and time of day (day, dawn, night). The camera height is 2.12m, and focal length is around 2000mm. In the experiments leading to the results shown in FIG.4, several sub-sequences are defined: "sunny-night-5" for the first 5 sequences of sunny night in the validation set; "rainy-5" for all of the 5 rainy scenes from the training set, including 1 during day, 3 in dawn and 1 at night.

Compared to the validation set used in FIG. 3, the dataset used for the results in FIG. 4 contains more diverse driving scenes in different cities, different time of day and weather conditions, with a different camera setup compared to that of the source data. The methods are evaluated on the defined "sunny-night-5" and "rainy-5" sequences. It can be observed that the present test-time adaptation method shows significant improvements over existing methods (all without median scaling, after input scale alignment) in both cases.

Interestingly, the modified CoMoDA method shows very poor performance both on DDAD dataset (row 4 and 9 of the table in Fig. 3) and on the Waymo Dataset (row 5 and 11 of the table in Fig. 4), due to a phenomenon of catastrophic forgetting. Conversely, the test-time domain adaptation according to the present disclosure (row 7 and 13), does not exhibit such catastrophic forgetting, but adapts continuously to the images of the target dataset showing performance that significantly outperforms the modified CoModa method.

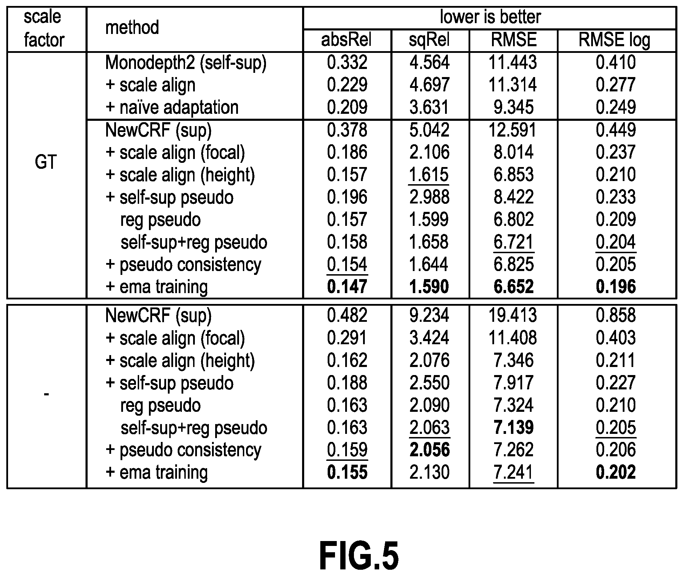

In reference to FIG. 5, an ablation study of the present method is presented. The ablation study shows the relative performance between depth estimation methods of the prior art, used as baselines, to which different components of the present test-time domain adaptation method are incrementally added. Further, a median scaling based on ground truth data is applied for the rows 2 to 12. Such scaling is not applied for rows 13 to 20.

In rows 3 to 5, the baseline method is the Monodepth2 method consisting in a self-supervised depth estimation model as described in [REF 11]. Such self-supervised depth estimation model is used as a first branch 110 and successively complimented with: a scale alignment module 102 ("scale align"); and the domain adaptation scheme of [REF 11] ("naïve adaptation") for the sake of comparison.

In rows 5 to 12, the baseline method is the NewCRF method as described in [REF 10], which consists in a supervised depth estimation model. The supervised depth estimation model is used in the first branch 110 and incrementally complimented with a plurality of components, described hereafter.

"Scale align (focal)" relates to a scale alignment module 102 correcting for focal length differences.

"Scale align (height)" relates to a scale alignment module 102 further correcting for camera height differences.

"Self-sup pseudo", "reg pseudo" and "self-sup+reg pseudo" are alternative components. "Self-sup pseudo" relates to the addition of supervision using pseudo-labels 132 from the self-supervised branch 130. "Reg pseudo" relates to the addition of supervision using pseudo-labels 122 from the reference branch 120. "Self-sup+reg pseudo" relates to the addition of supervision using both pseudo-labels 122 from the reference branch 120 and pseudo-labels 132 from the self-supervised branch 130.

"Pseudo consistency" relates to a filtering 123 of the pseudo labels 122 of the reference branch 120 using a mask 124 and a filtering 133 of the pseudo labels 132 of the self-supervised branch 130 using a mask 134 and a depth rescaling 135 to the depth map prediction 116 of the first branch 110.

"Ema training" relates to an update of the first branch 110 using an exponential moving average scheme as described before.

Performance of the methods is evaluated using the standard metrics previously mentioned. From the results in FIG. 5, it can be observed that every component improves the performance of the methods compared to the baseline methods adapted from the prior art. Furthermore, an embodiment comprising the full set of components provides the best overall performance when ground truth-based median scaling is applied and close to best performance when such median scaling is not applied.

Although the present disclosure refers to specific exemplary embodiments, modifications may be provided to these examples without departing from the scope of the invention as defined by the claims. Therefore, the description and the drawings should be considered in an illustrative rather than in a restrictive sense.

## Claims

1. A computer-implemented method for test-time domain adaptation of a first depth estimation model trained on source data, the method comprising, for each target image of a set of target data, the steps of:
- (S10) aligning a scale of the target image to a scale of the source data, thereby generating an aligned image; and
- (S20) using the first depth estimation model to generate a depth map prediction for the aligned image;
**characterized in that** the step (S10) of aligning a scale of the target image to a scale of the source data comprises:
- resizing the target image to account for a difference between a target height of a device used for acquisition of the target image and a source height of a device used for acquisition of the source data, such source height being extracted from the known source metadata of the source data.

2. The method of claim 1, wherein the step (S10) of aligning a scale of the target image to a scale of the source data further comprises:
- resizing the target image to account for a difference between a target focal length of a device used for acquisition of the target image and a source focal length of a device used for acquisition of the source data, such source focal length being extracted from known source metadata of the source data.

3. The method of claim 1 or 2, further comprising:
- (S30) using a second depth estimation model pre-trained on the source data under supervised learning in order to generate a reference depth map prediction for the aligned image, wherein the second depth estimation model is fixed after training; and
- (S50) updating the first depth estimation model in order to minimize a domain adaptation loss configured to compare the depth map prediction generated by the first depth estimation model to the reference depth map prediction generated by the second depth estimation model.

4. The method of claim 3, wherein the domain adaptation loss is further configured to calculate a per-pixel difference between the depth map prediction generated by the first depth estimation model and the reference depth map prediction generated by the second depth estimation model.

5. The method of claim 3 or 4, wherein the domain adaptation loss is further configured to mask out pixels of the reference depth map prediction generated by the second depth estimation model for which a distance between the depth map prediction generated by the first depth estimation model and the reference depth map prediction generated by the second depth estimation model is superior to a given threshold.

6. The method of any of claims 3 to 5, wherein the second-depth estimation model is a copy of the pre-trained first depth estimation model that is fixed after training on the source data.

7. The method of any of claims 3 to 6, further comprising:
- (S40) using a third depth estimation model, pre-trained under self-supervised learning using a given self-supervised loss, in order to generate a self-supervised depth map prediction for the aligned image;
wherein the third depth estimation model is updated, for the target image, using such self-supervised loss; and
wherein the step (S50) of updating the first depth estimation model further comprises:
- updating the first depth estimation model in order to minimize a domain adaptation loss configured to compare the depth map prediction generated by the first depth estimation model to the self-supervised depth map prediction generated by the third depth estimation model.

8. The method of claim 7, wherein the domain adaptation loss is further configured to calculate a per-pixel difference between the depth map prediction generated by the first depth estimation model and a rescaled version of the self-supervised depth map prediction generated by the third depth estimation model, the rescaled version being calculated in order to align with a depth scale of the depth map prediction generated by the first depth estimation model.

9. The method of claim 8, wherein the self-supervised depth map prediction is rescaled through median scaling, using a rescaling factor equal to a ratio of a median of the depth map prediction generated by the first depth estimation model to a median of the self-supervised depth map prediction generated by the third depth estimation model.

10. The method of any of claims 7 to 9, wherein the domain adaptation loss is further configured to mask out pixels of the self-supervised depth map prediction generated by the third depth estimation model for which a distance between the depth map prediction generated by the first depth estimation model and the self-supervised depth map prediction generated by the third depth estimation model is superior to a given threshold.

11. The method of any of claims 7 to 10, wherein the third depth estimation model is updated by a self-supervised image synthesis loss based on a pair of aligned target images.

12. A computer-implemented method for depth estimation on a series of target images, the method comprising steps of:
- training a first depth estimation model under supervised learning on source data;
- providing a copy of the trained first depth estimation model and fixing such copy to produce a second depth estimation model;
- training a third depth estimation model on the source data under self-supervision using an image synthesis loss;
- acquiring the series of target images from observation of a real scene; and
- utilizing the test-time domain adaptation method according to any of claims 7 to 11 with said first, second and third depth estimation models in order to generate a depth map prediction for target images of the series.

13. A computer program set including instructions for executing the steps of a method of any one of claims 1 to 12, when said program set is executed by at least one computer.

14. A recording medium readable by a computer and having recorded thereon at least one computer program including instructions for executing the steps of the method of any one of claims 1 to 12.

## Patentansprüche

1. Computerumgesetztes Verfahren zur Domänenanpassung in der Testzeit eines ersten mit Quelldaten trainierten Tiefenschätzungsmodells, wobei das Verfahren für jedes Zielbild eines Satzes von Zieldaten, folgende Schritte umfasst:
- (S10) Ausrichten einer Größenordnung des Zielbildes auf eine Größenordnung der Quelldaten, wodurch ein ausgerichtetes Bild generiert wird; und
- (S20) Verwenden des ersten Tiefenschätzungsmodells, um eine Tiefenkartenvorhersage für das ausgerichtete Bild zu generieren;
**dadurch gekennzeichnet, dass** der Schritt (S10) des Ausrichtens einer Größenordnung des Zielbildes auf eine Größenordnung der Quelldaten umfasst:
- Verändern der Größe des Zielbildes, um eine Differenz zwischen einer Zielhöhe einer Vorrichtung, die zur Erfassung des Zielbildes verwendet wird, und einer Quellhöhe einer Vorrichtung, die zur Erfassung der Quelldaten verwendet wird, zu berücksichtigen, wobei diese Quellhöhe aus den bekannten Quellmetadaten der Quelldaten extrahiert wird.

2. Verfahren nach Anspruch 1, wobei der Schritt (S10) des Ausrichtens einer Größenordnung des Zielbildes auf eine Größenordnung der Quelldaten ferner umfasst:
- Verändern der Größe des Zielbildes, um eine Differenz zwischen einer Zielbrennweite einer Vorrichtung, die zur Erfassung des Zielbildes verwendet wird, und einer Quellbrennweite einer Vorrichtung, die zur Erfassung der Quelldaten verwendet wird, zu berücksichtigen, wobei diese Quellbrennweite aus bekannten Quellmetadaten der Quelldaten extrahiert wird.

3. Verfahren nach Anspruch 1 oder 2, ferner umfassend:
- (S30) Verwenden eines zweiten Tiefenschätzungsmodells, das mit den Quelldaten durch überwachtes Lernen vortrainiert wurde, um eine Referenztiefenkartenvorhersage für das ausgerichtete Bild zu generieren, wobei das zweite Tiefenschätzungsmodell nach dem Trainieren festgelegt wird; und
- (S50) Aktualisieren des ersten Tiefenschätzungsmodells, um einen Domänenanpassungsverlust zu minimieren, das dazu konfiguriert ist, die Tiefenkartenvorhersage, die von dem ersten Tiefenschätzungsmodell generiert wird, mit der Referenztiefenkartenvorhersage, die von dem zweiten Tiefenschätzungsmodell generiert wird, zu vergleichen.

4. Verfahren nach Anspruch 3, wobei der Domänenanpassungsverlust ferner dazu konfiguriert ist, eine Differenz pro Pixel zwischen der Tiefenkartenvorhersage, die von dem ersten Tiefenschätzungsmodell generiert wird, und der Referenztiefenkartenvorhersage, die von dem zweiten Tiefenschätzungsmodell generiert wird, zu berechnen.

5. Verfahren nach Anspruch 3 oder 4, wobei der Domänenanpassungsverlust ferner dazu konfiguriert ist, Pixel der Referenztiefenkartenvorhersage, die von dem zweiten Tiefenschätzungsmodell generiert wird, auszublenden, für die ein Abstand zwischen der Tiefenkartenvorhersage, die von dem ersten Tiefenschätzungsmodell generiert wird, und der Referenztiefenkartenvorhersage, die von dem zweiten Tiefenschätzungsmodell generiert wird, größer als eine gegebene Schwelle ist.

6. Verfahren nach einem der Ansprüche 3 bis 5, wobei das zweite Tiefenschätzungsmodell eine Kopie des vortrainierten ersten Tiefenschätzungsmodells ist, das nach dem Trainieren mit den Quelldaten festgelegt wird.

7. Verfahren nach einem der Ansprüche 3 bis 6, ferner umfassend:
- (S40) Verwenden eines dritten Tiefenschätzungsmodells, das mit selbstüberwachtem Lernen unter Verwendung eines gegebenen selbstüberwachten Verlustes vortrainiert wird, um eine selbstüberwachte Tiefenkartenvorhersage für das ausgerichtete Bild zu generieren;
wobei das dritte Tiefenschätzungsmodell für das Zielbild unter Verwendung dieses selbstüberwachten Verlustes aktualisiert wird; und
wobei der Schritt (S50) des Aktualisierens des ersten Tiefenschätzungsmodells ferner umfasst:
- Aktualisieren des ersten Tiefenschätzungsmodells, um einen Domänenanpassungsverlust zu minimieren, der dazu konfiguriert ist, die Tiefenkartenvorhersage, die von dem ersten Tiefenschätzungsmodell generiert wird, mit der selbstüberwachten Tiefenkartenvorhersage, die von dem dritten Tiefenschätzungsmodell generiert wird, zu vergleichen.

8. Verfahren nach Anspruch 7, wobei der Domänenanpassungsverlust ferner dazu konfiguriert ist, eine Differenz pro Pixel zwischen der Tiefenkartenvorhersage, die von dem ersten Tiefenschätzungsmodell generiert wird, und einer in der Größenordnung veränderten Version der selbstüberwachten Tiefenkartenvorhersage, die von dem dritten Tiefenschätzungsmodell generiert wird, zu berechnen, wobei die in der Größenordnung veränderte Version berechnet wird, um sich auf eine Tiefengrößenordnung der Tiefenkartenvorhersage, die von dem ersten Tiefenschätzungsmodell generiert wird, auszurichten.

9. Verfahren nach Anspruch 8, wobei die Größenordnung der selbstüberwachten Tiefenkartenvorhersage durch Median-Skalierung verändert wird, wobei ein Faktor zur Veränderung der Größenordnung verwendet wird, der gleich einem Verhältnis eines Medianwertes der Tiefenkartenvorhersage, die von dem ersten Tiefenschätzungsmodell generiert wird, zu einem Medianwert der selbstüberwachten Tiefenkartenvorhersage, die von dem dritten Tiefenschätzungsmodell generiert wird, ist.

10. Verfahren nach einem der Ansprüche 7 bis 9, wobei der Domänenanpassungsverlust ferner dazu konfiguriert ist, die Pixel der selbstüberwachten Tiefenkartenvorhersage, die von dem dritten Tiefenschätzungsmodell generiert wird, auszublenden, für die ein Abstand zwischen der Tiefenkartenvorhersage, die von dem ersten Tiefenschätzungsmodell generiert wird, und der selbstüberwachten Tiefenkartenvorhersage, die von dem dritten Tiefenschätzungsmodell generiert wird, größer als eine gegebene Schwelle ist.

11. Verfahren nach einem der Ansprüche 7 bis 10, wobei das dritte Tiefenschätzungsmodell durch einen selbstüberwachten Bildsyntheseverlust basierend auf einem Paar von ausgerichteten Zielbildern aktualisiert wird.

12. Computerumgesetztes Verfahren zur Tiefenschätzung an einer Reihe von Zielbildern, wobei das Verfahren folgende Schritte umfasst:
- Trainieren eines ersten Tiefenschätzungsmodells unter Verwendung von überwachtem Lernen mit Quelldaten;
- Bereitstellen einer Kopie des trainierten ersten Tiefenschätzungsmodells und Festlegen dieser Kopie, um ein zweites Tiefenschätzungsmodell zu erzeugen;
- Trainieren eines dritten Tiefenschätzungsmodells mit den Quelldaten mit Selbstüberwachung unter Verwendung eines Bildsyntheseverlustes;
- Erfassen der Reihe von Zielbildern aus der Betrachtung einer realen Szene;
und
- Verwenden des Verfahrens zur Domänenanpassung in der Testzeit nach einem der Ansprüche 7 bis 11 mit dem ersten, zweiten und dritten Tiefenschätzungsmodell, um eine Tiefenkartenvorhersage für Zielbilder der Reihe zu generieren.

13. Computerprogrammsatz, der Anweisungen zum Ausführen der Schritte eines Verfahrens nach einem der Ansprüche 1 bis 12 umfasst, wenn der Programmsatz von mindestens einem Computer ausgeführt wird.

14. Aufzeichnungsmedium, das durch einen Computer lesbar ist und auf dem mindestens ein Computerprogramm gespeichert ist, das Anweisungen zum Ausführen der Schritte des Verfahrens nach einem der Ansprüche 1 bis 12 umfasst.

## Revendications

1. Procédé mis en œuvre par ordinateur pour une adaptation de domaine en temps de test d'un premier modèle d'estimation de profondeur entraîné sur des données source, le procédé comprenant, pour chaque image cible d'un ensemble de données cibles, les étapes suivantes :
- (S10) aligner une échelle de l'image cible sur une échelle des données source, générant ainsi une image alignée ; et
- (S20) utiliser le premier modèle d'estimation de profondeur pour générer une prédiction de carte de profondeur pour l'image alignée ;
**caractérisé en ce que** l'étape (S10) d'alignement d'une échelle de l'image cible sur une échelle des données source comprend :
- le redimensionnement de l'image cible pour tenir compte d'une différence entre une hauteur cible d'un dispositif utilisé pour acquérir l'image cible et une hauteur source d'un dispositif utilisé pour acquérir les données source, cette hauteur source étant extraite des métadonnées source connues des données source.

2. Procédé selon la revendication 1, dans lequel l'étape (S10) d'alignement d'une échelle de l'image cible sur une échelle des données source comprend en outre :
- le redimensionnement de l'image cible pour tenir compte d'une différence entre une longueur focale cible d'un dispositif utilisé pour acquérir l'image cible et une longueur focale source d'un dispositif utilisé pour acquérir les données source, cette longueur focale source étant extraite des métadonnées source connues des données source.

3. Procédé selon la revendication 1 ou 2, comprenant en outre les étapes suivantes :
- (S30) utiliser un deuxième modèle d'estimation de profondeur pré-entraîné sur les données source dans le cadre d'un apprentissage supervisé afin de générer une prédiction de carte de profondeur de référence pour l'image alignée, le deuxième modèle d'estimation de profondeur étant fixé après l'entraînement ; et
- (S50) mettre à jour le premier modèle d'estimation de profondeur afin de minimiser une perte d'adaptation de domaine configurée pour comparer la prédiction de carte de profondeur générée par le premier modèle d'estimation de profondeur à la prédiction de carte de profondeur de référence générée par le deuxième modèle d'estimation de profondeur.

4. Procédé selon la revendication 3, dans lequel la perte d'adaptation de domaine est en outre configurée pour calculer une différence par pixel entre la prédiction de carte de profondeur générée par le premier modèle d'estimation de profondeur et la prédiction de carte de profondeur de référence générée par le deuxième modèle d'estimation de profondeur.

5. Procédé selon la revendication 3 ou 4, dans lequel la perte d'adaptation de domaine est en outre configurée pour éliminer par masque les pixels de la prédiction de carte de profondeur de référence générée par le deuxième modèle d'estimation de profondeur pour lesquels une distance entre la prédiction de carte de profondeur générée par le premier modèle d'estimation de profondeur et la prédiction de carte de profondeur de référence générée par le deuxième modèle d'estimation de profondeur est supérieure à un seuil donné.

6. Procédé selon l'une quelconque des revendications 3 à 5, dans lequel le deuxième modèle d'estimation de profondeur est une copie du premier modèle d'estimation de profondeur pré-entraîné qui est fixé après l'entraînement sur les données source.

7. Procédé selon l'une quelconque des revendications 3 à 6, comprenant en outre les étapes suivantes :
- (S40) utiliser un troisième modèle d'estimation de profondeur pré-entraîné dans le cadre d'un apprentissage auto-supervisé en utilisant une perte auto-supervisée donnée, afin de générer une prédiction de carte de profondeur auto-supervisée pour l'image alignée ;
le troisième modèle d'estimation de profondeur étant mis à jour pour l'image cible en utilisant cette perte auto-supervisée ; et
l'étape (S50) de mise à jour du premier modèle d'estimation de profondeur comprenant en outre :
- la mise à jour du premier modèle d'estimation de profondeur afin de minimiser une perte d'adaptation de domaine configurée pour comparer la prédiction de carte de profondeur générée par le premier modèle d'estimation de profondeur à la prédiction de carte de profondeur auto-supervisée générée par le troisième modèle d'estimation de profondeur.

8. Procédé selon la revendication 7, dans lequel la perte d'adaptation de domaine est en outre configurée pour calculer une différence par pixel entre la prédiction de carte de profondeur générée par le premier modèle d'estimation de profondeur et une version remise à l'échelle de la prédiction de carte de profondeur auto-supervisée générée par le troisième modèle d'estimation de profondeur, la version remise à l'échelle étant calculée afin de s'aligner sur une échelle de profondeur de la prédiction de carte de profondeur générée par le premier modèle d'estimation de profondeur.

9. Procédé selon la revendication 8, dans lequel la prédiction de carte de profondeur auto-supervisée est remise à l'échelle par une mise à l'échelle médiane, en utilisant un facteur de remise à l'échelle égal à un rapport d'une médiane de la prédiction de carte de profondeur générée par le premier modèle d'estimation de profondeur sur une médiane de la prédiction de carte de profondeur auto-supervisée générée par le troisième modèle d'estimation de profondeur.

10. Procédé selon l'une quelconque des revendications 7 à 9, dans lequel la perte d'adaptation de domaine est en outre configurée pour éliminer par masque les pixels de la prédiction de carte de profondeur auto-supervisée générée par le troisième modèle d'estimation de profondeur pour lesquels une distance entre la prédiction de carte de profondeur générée par le premier modèle d'estimation de profondeur et la prédiction de carte de profondeur auto-supervisée générée par le troisième modèle d'estimation de profondeur est supérieure à un seuil donné.

11. Procédé selon l'une quelconque des revendications 7 à 10, dans lequel le troisième modèle d'estimation de profondeur est mis à jour par une perte de synthèse d'image auto-supervisée basée sur une paire d'images alignées cibles.

12. Procédé mis en œuvre par ordinateur pour une estimation de profondeur sur une série d'images cibles, le procédé comprenant les étapes suivantes :
- entraîner un premier modèle d'estimation de profondeur dans le cadre d'un apprentissage supervisé sur des données source ;
- fournir une copie du premier modèle d'estimation de profondeur entraîné et fixer cette copie pour produire un deuxième modèle d'estimation de profondeur ;
- entraîner un troisième modèle d'estimation de profondeur sur les données source dans le cadre d'une auto-supervision en utilisant une perte de synthèse d'image ;
- acquérir la série d'images cibles à partir de l'observation d'une scène réelle ; et
- utiliser le procédé d'adaptation de domaine en temps de test selon l'une quelconque des revendications 7 à 11 avec lesdits premier, deuxième et troisième modèles d'estimation de profondeur afin de générer une prédiction de carte de profondeur pour les images cibles de la série.

13. Ensemble de programmes informatiques comportant des instructions pour exécuter les étapes d'un procédé selon l'une quelconque des revendications 1 à 12 lorsque ledit ensemble de programmes est exécuté par au moins un ordinateur.

14. Support d'enregistrement lisible par un ordinateur et sur lequel est enregistré au moins un programme informatique comportant des instructions pour exécuter les étapes du procédé selon l'une quelconque des revendications 1 à 12.
